# EUROPEAN PATENT APPLICATION

(11) **EP 1 168 660 A1**
(43) Date of publication of application: **02.01.2002**
(21) Application number: 01901374.7
(22) Date of filing: 17.01.2001
(51) Int. Cl.: H04B 7/08, H04B 7/10, H04B 7/26, H01Q 3/26

(54) **ARRAY ANTENNA BASE STATION AND METHOD OF ARRAY ANTENNA RECEPTION**

(30) Priority: 18.01.2000 JP 2000008974
(71) Applicant: MATSUSHITA ELECTRIC INDUSTRIAL CO., LTD., Kadoma-shi, Osaka 571-8501 (JP)
(72) Inventor: AOYAMA, Takahisa, Yokosuka-shi, Kanagawa 239-0841 (JP)
(74) Representative: Grünecker, Kinkeldey, Stockmair & Schwanhäusser Anwaltssozietät
(86) International application number: JP0100248
(87) International publication number: WO0154309

(57) **Abstract**

An adaptive signal processing section 107 calculates reception weights by adaptive signal processing of demodulation signals for communication terminal apparatus from a demodulation section 106; and performs multiplication processing, using the above demodulation signals and the reception weights. And, when communication is opened, the above adaptive signal processing section 107 may execute multiplication processing, using the reception weights stored in a storage section 109 at the previous communication with the above communication terminal apparatus, and the demodulation signals.

## Description

### Technical Field

The present invention relates to a communication apparatus used in a digital mobile communication system, and, especially, to a base station apparatus provided with the same array antennas.

### Background

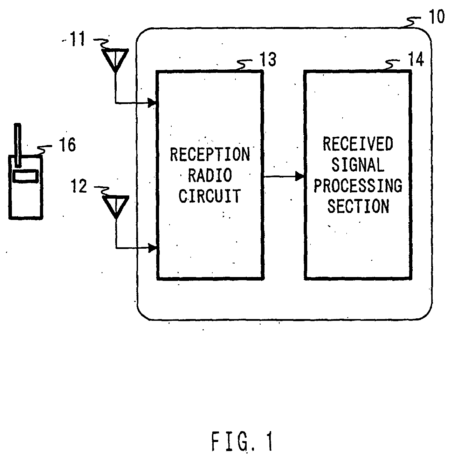

A base station apparatus provided with array antennas (Hereinafter, called as "array antenna base station apparatus") comprises a plurality of antennas, and is a communication apparatus by which directivity at reception may be freely set by adjusting the amplitude and phase of signals (received signals) received through each antenna. The above adjustment of the amplitude and the phase of the received signals is performed by multiplication of the above received signals by complex coefficients. Hereinafter, a conventional array antenna base station apparatus will be described, referring to FIG. 1.

FIG. 1 is a schematic view showing a configuration of the conventional array antenna base station apparatus, and a mobile station apparatus performing radio communication with the above base station apparatus. Here, FIG. 1 shows an example in which the above array antenna base station apparatus is provided with two antennas, and, moreover, the above array antenna base station apparatus performs radio communication with a mobile station apparatus.

In FIG. 1, radio signals transmitted by the mobile station apparatus 16 is received by the antennas 11, 12 in the base station apparatus 10. The signals (received signals) received by the antennas 11, 12 are down-converted to an intermediate frequency band after down conversion to a base frequency band, by a reception radio circuit 13. The received signals after the above down conversion are sent to a received signal processing section 14.

In the received signal processing section 14, demodulation signals are obtained by demodulation processing of the received signals after the above down conversion. And, in the received signal processing section 14, array antenna processing is performed for the obtained demodulation signals. That is, complex coefficients (reception weights) are calculated by adaptive signal processing of the obtained demodulation signals. The calculated complex coefficients are multiplied by the obtained demodulation signals. Thereby, the adjustment of the amplitude and the phase of the demodulation signals is performed for the amplitude and the phase. Here, the complex coefficients are adjusted by various kinds of adaptive algorithms, such as an LMS (Least Mean Square) algorithm, at the above adaptive signal processing.

The above base station apparatus 10 may intensely receive only incoming electromagnetic waves from a desired direction (Hereinafter, called as "have reception directivity") by adjustment of the above complex coefficients. That is, the base station apparatus 10 may give the reception directivity to the above demodulation signals by array antenna processing in the received signal processing section 14.

The base station apparatus 10 may keep a signal to interference ratio (Hereinafter, called as "SIR") high by having the reception directivity.

However, the conventional array antenna base station apparatus has had the following problems. That is, it takes some time before the received signals from a new mobile station apparatus have the reception directivity after the conventional array antenna base station apparatus opens communication with the above new mobile station apparatus, as predetermined time is required for calculation of the complex coefficients in the above array antenna processing.

Therefore, the array antenna base station apparatus is required to perform array antenna processing by which the reception directivity is newly obtained for the received signals from the mobile station apparatus even when the array antenna base station apparatus reopens communication with the above mobile station apparatus after disconnection of channels for the mobile station apparatus under communication with the conventional array antenna base station apparatus for some reasons. Thereby, it takes some time before high-SIR communication between the array antenna base station apparatus and the above mobile station one becomes possible.

Thus, it has been difficult in the conventional array antenna base station apparatus to perform high-quality communication with the above mobile station apparatus between the opening of communication (a point of time at which communication is opened again) with the above mobile station apparatus; and completion of the array antenna processing for the above mobile station -apparatus, in the case of reopening of communication with the above mobile station apparatus after disconnection of channels of the mobile station apparatus under communication with the above conventional one.

### Disclosure of Invention

The object of the present invention is to provide a array antenna base station apparatus for high-quality communication with a communication terminal apparatus at reopening of communication.

The above object may be realized by array antenna processing at opening of communication, using reception weights calculated at the previous communication. And, the above object is realized by generation of new reception weights at opening of communication, using reception weights calculated at the previous communication and the moving state measured through the above weights; and, by array antenna processing using the above generated reception-weights.

### Brief Description of Drawings

FIG. 1 is a schematic view showing a configuration of a conventional array antenna base station apparatus, and a mobile station apparatus for radio communication with the above base station apparatus.
FIG. 2 is a block diagram showing a configuration of an array antenna base station apparatus according to a first embodiment of the present invention, and a mobile station apparatus for radio communication with the above base station apparatus;
FIG. 3 is a flow chart showing operations of the array antenna base station apparatus according to the first embodiment of the present invention;
FIG. 4 is a block diagram showing a configuration of a array antenna base station apparatus according to a second embodiment of the present invention, and a mobile station apparatus for radio communication with the above base station apparatus;
FIG. 5 is a flow chart showing operations of the array antenna base station apparatus according to the second embodiment of the present invention;
FIG. 6 is a schematic view showing one example for generation of a reception weight by a decision section of the array antenna base station apparatus according to the second embodiment of the present invention;
FIG. 7 is a block diagram showing a configuration of a array antenna base station apparatus according to a third embodiment of the present invention, and a mobile station apparatus for radio communication with the above base station apparatus; and
FIG. 8 is a flow chart showing operations of the array antenna base station apparatus according to the third embodiment of the present invention.

### Best Mode of Carrying Out the Invention

Hereinafter, the best mode of carrying out the invention will be described in details, referring to drawings. Here, in the following embodiments, a case, where the array antenna base station apparatus performs radio communication with a mobile station apparatus for array antenna reception using two antennas, will be described as one example for simplification.

### (First Embodiment)

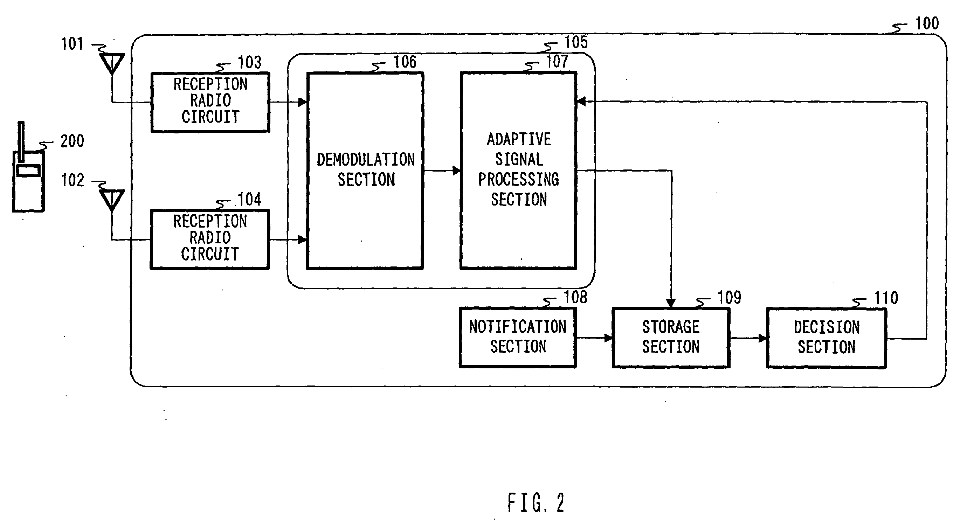

FIG. 2 is a block diagram showing a configuration of a array antenna base station apparatus according to the first embodiment of the present invention, and a mobile station apparatus for radio communication with the above base station apparatus.

In FIG. 2, reception radio circuits 103, 104 perform base band demodulation of signals (received signals) which have been received by antennas 101, 102, respectively. Here, two kinds of antennas and two kinds of reception radio circuits are provided in the present embodiment, as a case where a base station apparatus 100 performs array antenna reception will be described. The received signals after base band demodulation in the reception radio circuits 103, 104 are sent to a base band signal processing section 105.

The above base band signal processing section 105 comprises a demodulation section 106 for demodulation processing of the received signals after the above base band demodulation; and an adaptive signal processing section 107 for array antenna processing of the demodulation signals obtained by demodulation processing in the above demodulation section 106. The above adaptive signal processing section 107 performs array antenna processing using reception weights, when the reception weights are sent from a decision section 110 which will be described later. The details of the above adaptive signal processing section 107 will be described later. The reception weights generated by array antenna processing in the adaptive signal processing section 107 are sent to a storage section 109. Here, one kind of base band signal processing section is provided in the present embodiment, as a case where the above base station apparatus 100 performs radio communication with one mobile station apparatus.

A notification section 108 has a function for recognition of the presence of generation of reopened communication, and information on the reopened communication is transmitted to the storage section 109, when the reopened communication is generated. Here, the above presence of generation of the reopened communication corresponds to the presence of outgoing calls to the base station apparatus 100 from mobile station apparatus (Hereafter, called as "known mobile station apparatus") which have previously communicated with the base station apparatus 100; and to the presence of outgoing calls from the base station apparatus 100 to the above known mobile station apparatus.

The storage section 109 stores the reception weights (information on reception directivity) calculated by the adaptive signal processing section 107; and sends the reception weights which have been previously made for known mobile station apparatus to the decision section 110, when information on the reopened communication is sent from the notification section 108.

The decision section 110 decides whether the reception weights sent from the storage section 109 are applicable for the array antenna processing in the adaptive signal processing section 107; and outputs the reception weights to the adaptive signal processing section 107 according to the above decision results.

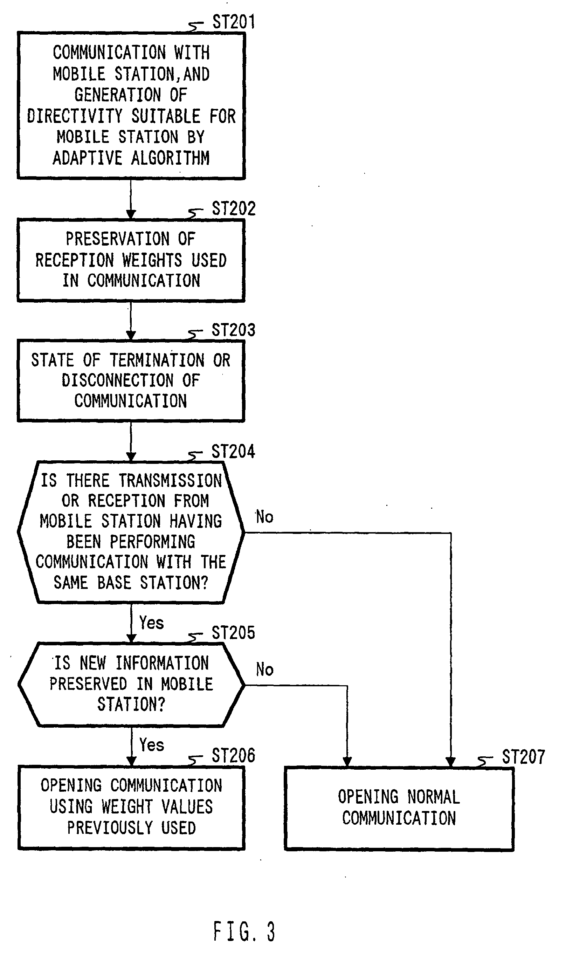

Then, operations of the above base station apparatus 100 with the above configuration will be described, referring to FIG. 3, other than FIG. 2.

FIG. 3 is a flow chart showing operations of the array antenna base station apparatus according to the first embodiment of the present invention.

In the first place, the base station apparatus 100 performs communication with a mobile station apparatus 200, at STEP (Hereinafter, called as "ST") 201. The operations in the base station apparatus 100 during the above communication are as follows.

The radio signals transmitted from the mobile station apparatus 200 are received by the antennas 101, 102 of the base station apparatus 100 through transmission paths. Base band demodulation processing of the signals received (received signals) by the antennas 101, 102 is performed by the reception radio circuits 103, 104, respectively. Here, predetermined frequency conversion processing and so on are performed as the above base band demodulation processing.

The received signals after the base band demodulation processing are demodulated by the demodulation section 106 in the base band signal processing section 105. Thereby, demodulation signals are obtained. The obtained demodulation signals are sent to the adaptive signal processing section 107. Here, a demodulation method used in the demodulation section 106 is corresponding to a modulation method used for the mobile station apparatus 200, and to despreading processing, and so on in communication according to a CDMA (Code Division Multiple Access) method.

In the adaptive signal processing section 107, array antenna processing of the obtained. demodulation signals is almost permanently performed during the communication. That is, in the first place, reception weights are calculated by adaptive signal processing of the obtained demodulation signals. The calculated reception-weights are sent to the storage section 109. Here, MMSE-type adaptive algorithms, such as LMS, RLS, and SMI, and so on; and beam-steering-type signal processing for control maximizing the received intensity of desired received-signals are used at the above adaptive signal processing.

Moreover, the obtained demodulation signals are multiplied by the calculated reception-weights. When it is assumed, for example, that the demodulation signals are r (r1, r2, ..., rn), and the reception weights w (w1, w2, ..., wn), multiplication like r x w* is performed. Here, n is a number of the antennas.

The base station apparatus 100 may have the reception directivity to the mobile station apparatus 200 by the above array antenna processing. That is, the demodulation signals, which are multiplied by the reception weights in the adaptive signal processing section 107, become signals with a high SIR.

Then, at ST202, the reception weights sent from the adaptive signal processing section 107 are preserved in the storage section 109 as current information on the mobile station apparatus 200. Specifically, new reception weights are stored in the storage section 109 as current reception weights, every time the above new reception weights are transmitted from the adaptive signal processing section 107. In addition, the reception weights for the past unit time are stored in the storage section 109.

After termination of operations in the above ST201 and ST202, it is configured that the state where communication between the base station apparatus 100 and the mobile station apparatus 200 is disconnected or terminated is obtained at ST203.

Thereafter, the processing moves to ST204 when the base station apparatus 100 opens communication with any one of mobile station apparatus. It is decided at ST204 whether a mobile station apparatus opening communication with the base station apparatus 100 is a known mobile station apparatus (the mobile station apparatus 200 here). When it is judged that the above mobile station apparatus is not the known mobile station apparatus, the processing moves to ST207; and, when it is judged that the above mobile station apparatus is the known mobile station apparatus, the processing moves to ST205.

At ST207, the base station apparatus 100 opens normal communication with a new mobile station apparatus. In such a case, operations in the base station apparatus 100 are similar to those described at ST201 through ST203.

At ST205, the base station apparatus 100 reopens communication with the mobile station apparatus 200.

In such a case, operations in the base station apparatus 100 are as follows.

In the first place, the notification section 108 for recognition of the presence of generation of reopened communication recognizes outgoing calls to the base station apparatus 100 from the known mobile station apparatus (the mobile station apparatus 200 here) , or, outgoing calls to the known mobile station apparatus from the base station apparatus 100.

Thereafter, information on reopened communication is sent from the notification section 108 to the storage section 109.

In the storage section 109, the reception weights which have been previously made for the mobile station apparatus 200 are called, based on the information on reopened communication. The called reception-weights for the mobile station apparatus 200 are sent to the decision section 110.

It is decided in the decision section 110 whether the reception weights for the mobile station apparatus 200 from the storage section 109 are fully new (that is, whether the above weights are applicable for array antenna processing in the adaptive signal processing section 107). It is possible to decide by using, for example, the following parameters whether the reception weights for the mobile station apparatus 200 are fully new:
i) Time from a point of time, when the reception weights from the storage section 109 are stored, to the current one;
ii) variation frequency in the reception weights at the previous communication (the above frequency may be measured, using the reception weights for the past unit time stored in the storage section 109).

That is, it is decided in the case of low variation frequency in the reception weights that - the mobile station apparatus 200 hardly moves from a position at a point of time when the reception weights were stored at the previous communication. Accordingly, it is decided in such a case that the reception weights from the storage section 109 are fully new (that the above weights are applicable for the array antenna processing).

On the other hand, it may be decided in the case of high variation frequency in the reception weights that the above apparatus 200 does not a little move from a position at a point of time when the reception weights were stored at the previous communication, even when the time described in the above item i) is short. Accordingly, it is decided in such a case that the reception weights from the storage section 109 are old (the above weights are not applicable for the array antenna processing).

In the decision section 110, the processing moves to ST206 when it is decided that the reception weights from the storage section 109 are fully new; and the processing moves to ST207 when the above reception weights is decided to be old.

At ST206, the reception weights from the storage section 109 is sent from the decision section 110 to the adaptive signal processing section 107.

Thereby, the adaptive signal processing section 107 is put into a state where it is possible without performing adaptive signal processing in the array antenna processing to have the reception directivity to the mobile station apparatus 200. In such a state, the demodulation signals obtained by multiplication processing in the adaptive signal processing section 107 become signals with a high SIR.

In such a state, the base station apparatus 100 opens communication with the mobile station apparatus 200. The subsequent operations are similar to those described at ST201 through ST203. The operations in the base station apparatus 100 have been described above.

Thus, in the array antenna base station apparatus according to the present embodiment, the reception weights, obtained by adaptive signal processing at usual communication, for the above mobile station apparatus have been stored. Accordingly, it is possible in the case of reopening communication after termination of normal communication to form the reception directivity to the mobile station apparatus by performing the array antenna processing, in which, the above reception weights are used, when the reception weights obtained at the previous communication are fully new. Thereby, high-quality communication with the above mobile station apparatus may be realized from a time point when communication is reopened, as the array antenna processing of the received signals for the above mobile station apparatus may be executed at reopening communication without waiting for calculation of the reception weights by the adaptive signal processing.

### (Second Embodiment)

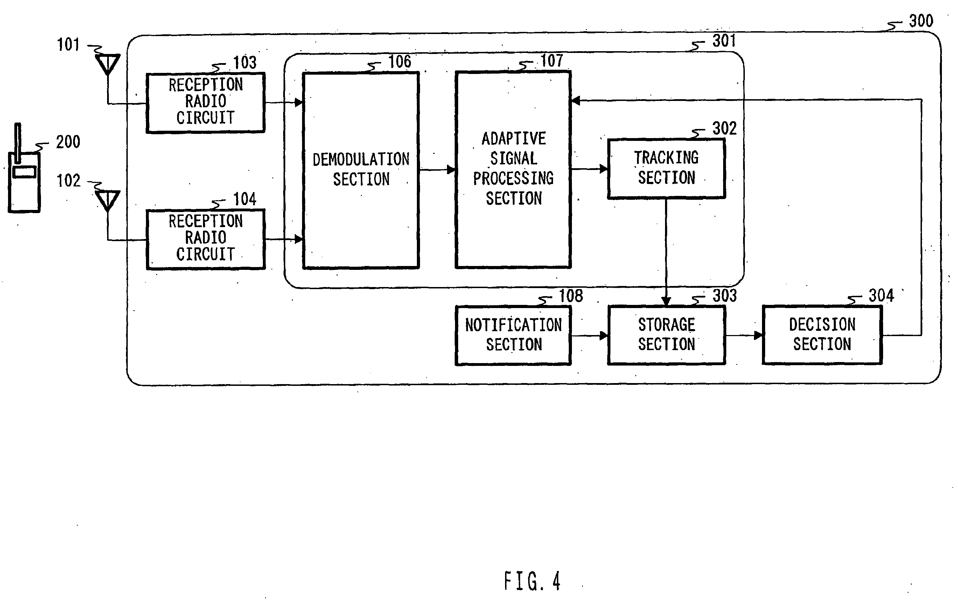

A case, where a mobile station apparatus moves from a position at the previous communication to another one at a time point of reopening of communication in the first embodiment, will be described in the present embodiment. Hereinafter, a array antenna base station apparatus according to the present embodiment will be described, referring to FIG. 4.

FIG. 4 is a block diagram showing a configuration of the array antenna base station apparatus according to the second embodiment of the present invention, and the mobile station apparatus for radio communication with the above base station apparatus.

Here, parts in FIG. 4 similar to those previously described with reference to the first embodiment are denoted by the same reference numbers as those in FIG. 2, and detailed description will be eliminated.

In FIG. 4, a base band signal processing section 301 comprises, other than a demodulation section 106 and an adaptive signal processing section 107, a tracking section 302 for tracking (recognition of the moving state of the mobile station apparatus) using the reception weights calculated in the above adaptive signal processing section 107. The above tracking section 302 measures the moving directions and moving speeds and so on (moving state) of a mobile station apparatus 200, using the reception weights almost permanently calculated in the adaptive signal processing section 107. The information on the reception weights, the moving directions, the moving speed, and so on (Hereinafter, called as "mobile station information") is sent to a storage section 303.

The above storage section 303 stores the mobile station information from the tracking section 302, and sends the mobile station information on a known mobile station apparatus to a decision section 304, when information on reopening of communication is sent from a notification section 108.

The decision section 304 decides whether the mobile station information sent from the storage section 303 is applicable for array antenna processing in the adaptive signal processing section 107, and, according to the decision results, outputs the reception weights made using the mobile station information to the adaptive signal processing section 107.

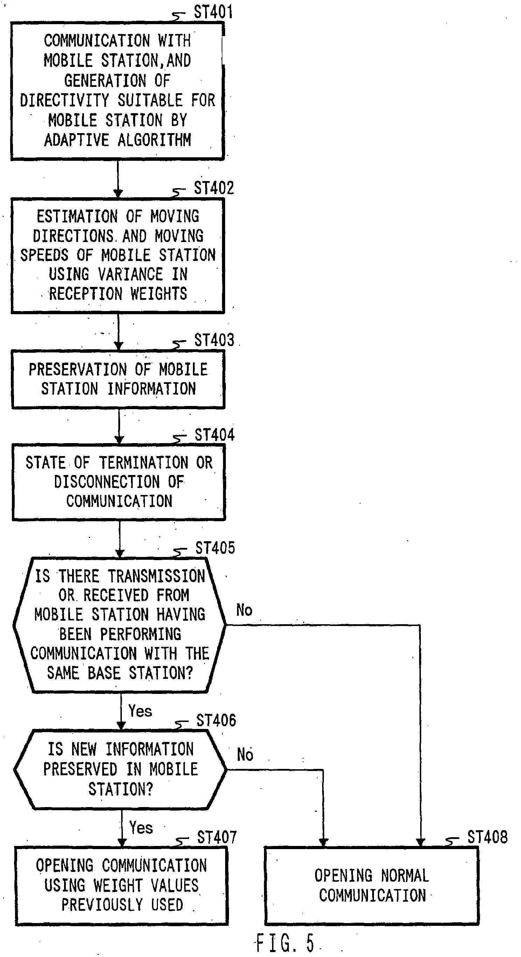

Then, operations of a base station apparatus 300 with the above configuration will be described, referring to FIG. 5 other than FIG. 4. FIG. 5 is a flow chart showing operations of the array antenna base station apparatus according to the second embodiment of the present invention.

In the first place, the base station apparatus 300 performs communication with the mobile station apparatus 200 at ST401. In such a case, the operations in the base station apparatus 300 are similar to those described at ST201, except that the reception weights calculated in the adaptive signal processing 107 are sent to the tracking section 302.

Then, the tracking section 302 measures, at ST402, general moving directions and moving speeds of the mobile station apparatus 200, based on the reception weights from the adaptive signal processing section 107. That is, the general moving directions and moving speeds of the mobile station apparatus 200 are measured, using that the reception weights from the adaptive signal processing section 107 depends on the movement of the mobile station apparatus 200.

Specifically, the moving directions of the mobile station apparatus 200 are measured by using a fact that the direction (position) of the mobile station apparatus 200 may be measured by calculating what kind of directivity the reception weights have. And, after a moving variation of the mobile station apparatus 200 is measured, using the direction measured by the previous reception weights and one by new reception weights, the moving speed of the mobile station apparatus 200 is measured by division of the above variation by the variation time. Here, the above moving speed is corresponding to the variation speed in the directions of the mobile station apparatus 200 as viewed from the base station apparatus 300. The moving directions and the moving speeds measured by the tracking section 302, together with the reception weights, are sent to the storage section 303 as mobile station information.

At ST403, the above mobile station information from the tracking section 302 is stored by the storage section 303. Specifically, new mobile station information is stored in the storage section 303 as current mobile station information every time the above new mobile station information is sent from the tracking section 302. Moreover, in the storage section 303, the reception weights for the past unit time are stored in the same manner as those in the first embodiment. After termination of the operations at ST401 through ST403, the processing is configured to move, at ST404, to a state of disconnection or termination of communication between the base station apparatus 300 and the mobile station apparatus 200.

Thereafter, the processing moves to ST405, when- the base station apparatus 300 opens communication with any one of mobile station apparatus. It is decided at ST405 whether the mobile station apparatus which opens communication with the base station apparatus 300 is the known mobile station apparatus (the mobile station apparatus 200 here). When it is judged that the above mobile station apparatus is not the known mobile station apparatus, the processing moves to ST408. And, when it is judged that the above mobile station apparatus is the known mobile station apparatus, the processing moves to ST406.

At ST408, the base station apparatus 300 opens communication with a new mobile station apparatus. In such a case, the operations of the base station apparatus 300 are performed in the same manner as those described at ST401 through ST404.

At ST406, the base station apparatus 300 reopens communication with the mobile station apparatus 200. The operations of the base station apparatus 300 in such a case are as follows.

In the first place, information on reopening of communication is sent from the notification section 108 to the storage section 303, after recognition of the generation of the above reopening of communication by the notification section 108 in the same manner as that of the first embodiment. In the storage section 303, the mobile station information on the mobile station apparatus 200 is called, based on the information on reopening of communication. The called mobile station information on the mobile station apparatus 200 is sent to the decision section 304.

In the first place, it is decided in the decision section 304 whether the mobile station information from the storage section 109 is fully new. It is decided, for example, by parameters shown in the item i) in the first embodiment, whether the above mobile station information is fully new.

When it is judged in the decision section 304 whether the above mobile station information is fully new, the processing moves to ST407; and, when it is judged there that the above mobile station information is an old one, the processing moves to ST408.

At ST407, the reception weights for estimation directions of the mobile station apparatus 200 are generated in the decision section 304, using the mobile station information from the storage section 303.

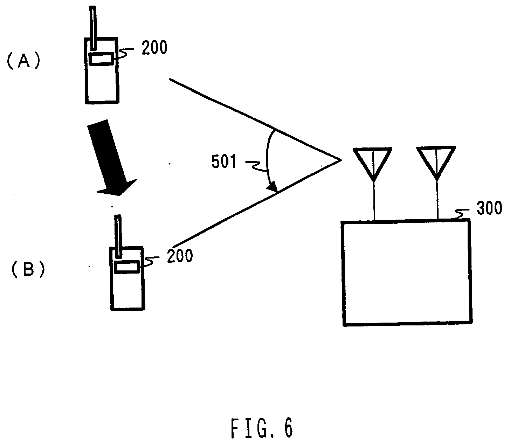

An example for generation of the reception weights by the decision section 304 will be described, referring to FIG. 6. FIG. 6 is a schematic view showing one example for generation of reception weights by the decision section 304 in the array antenna base station apparatus according to the second embodiment of the present invention.

In FIG. 6, a direction (A) is a direction toward a position (the above position may be estimated by the moving direction in the mobile station information) where the mobile station apparatus 200 existed at a time point (at the previous communication) when the mobile station information was stored, and a direction (B) is a direction toward a position where the mobile station apparatus 200 exists at reopening of communication.

In the first place, the direction (B) toward a position where the mobile station apparatus 200 is assumed currently to exist is calculated, according to the moving direction and the moving speed in the mobile station information. Then, the difference in the angle 501 between the direction (A) toward the position where the mobile station apparatus 200 existed at the previous communication and the above direction (B) may be obtained. Thereafter, the reception weights for the current estimation direction of the mobile station apparatus 200 are generated by multiplication of the reception weights at the mobile station apparatus by the obtained difference in the angle. The generated reception weights may have a function to give a directivity toward the direction (B) of the mobile station apparatus 200 to the demodulation signal. One example for generation of reception weights by the decision section 304 has been described above.

The reception weights generated in the decision section 304 are sent to the adaptive signal processing section 107. Thereby, it becomes possible without performing adaptive signal processing in the array antenna processing for the adaptive signal processing section 107 to have the reception directivity to the mobile station apparatus 200. In the above state, the demodulation signals obtained by multiplication processing in the adaptive signal processing section 107 become signals with a high SIR.

In such a state, the base station apparatus 300 opens communication with the mobile station apparatus 200. The subsequent operations are similar to those described at ST401 through ST403.

Thus, in the array antenna base station apparatus according to the present embodiment, information on the mobile station apparatus (that is, the reception weights for the mobile station apparatus obtained by the adaptive signal processing and the moving directions and the moving speeds of the mobile station apparatus estimated on the above reception weights) has been stored at normal communication. Accordingly, it is possible in the case of reopening communication after termination of normal communication to generate the reception weights for estimated directions after . estimation of the above directions of the mobile station apparatus at reopening of communication, based on mobile station information when the above mobile station information obtained at the previous communication are fully new. The reception directivity for the above known mobile station apparatus may be formed by array antenna processing using the reception weights generated above, even when the mobile 'station apparatus moves from a position at the previous communication to another one at reopening of communication. Thereby, high-quality communication with the above mobile station apparatus may be realized from a time point of reopening of communication, as the array antenna processing of the received signals of the above mobile station apparatus may be executed at reopening communication without waiting for calculation of the reception weights by the adaptive signal processing.

### (Third Embodiment)

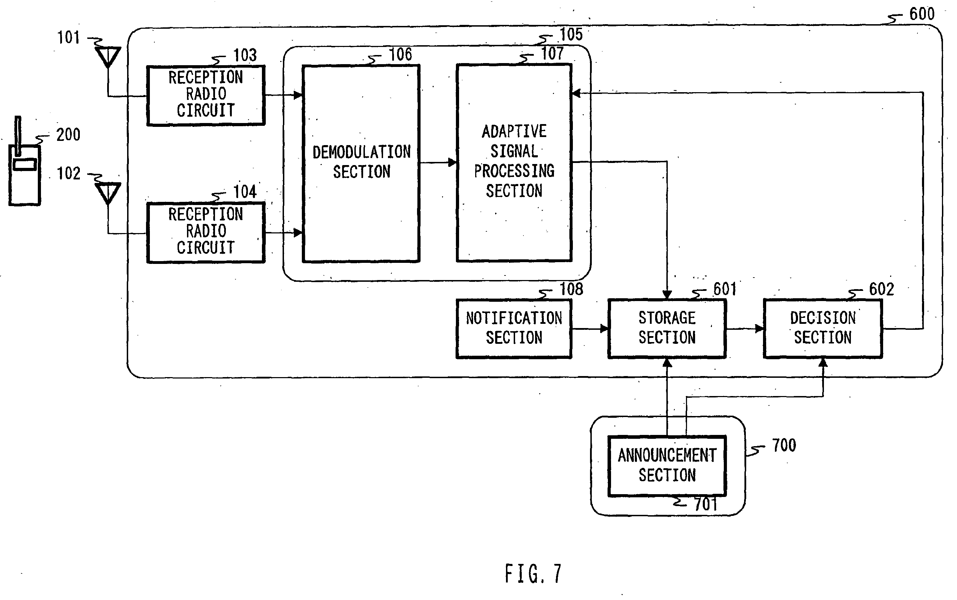

A case, where, in the first embodiment, communication contents are used as a decision criterion for use of the reception weights stored at the previous communication will be described. Hereinafter, a array antenna base station apparatus according to the present embodiment will be described, referring to FIG. 7.

FIG. 7 is a block diagram showing a configuration of the array antenna base station apparatus according to the third embodiment of the present invention, and a mobile station apparatus for radio communication with the above base station apparatus. Here, parts in FIG. 7 similar to those previously described with reference to the first embodiment (FIG. 2) are denoted by the same reference numbers as those in FIG. 2, and detailed description will be eliminated.

In FIG. 7, an upper layer 700 manages information (Hereinafter, called as "communication information") on the communication which the mobile station apparatus is currently performing. Here, the communication information includes, for example, service contents and transmission rates of the communication. The upper layer 700 comprises an announcement section 701 for announcement of the above communication information to a base station apparatus 600 (to a storage section 601, and a decision section 602 thereof).

In the above base station apparatus 600, the storage section 601 stores reception weights calculated in an adaptive signal processing section 107, and the communication information sent from the information section 701 in the upper layer 700. And, the above storage section 601 sends the reception weights and the communication information, which were been previously stored, on known mobile station apparatus to the decision section 602, when information on reopening of communication is sent from a notification section 108.

The decision section 602 decides, using the communication information (stored at the previous communication) from the storage section 601 and that (for the current communication) from the announcement section 701, whether the reception weights sent from the storage section 601 are applicable for array antenna processing in the adaptive signal processing section 107; and, according to the above decision results, outputs the above reception weights to the adaptive signal processing section 107.

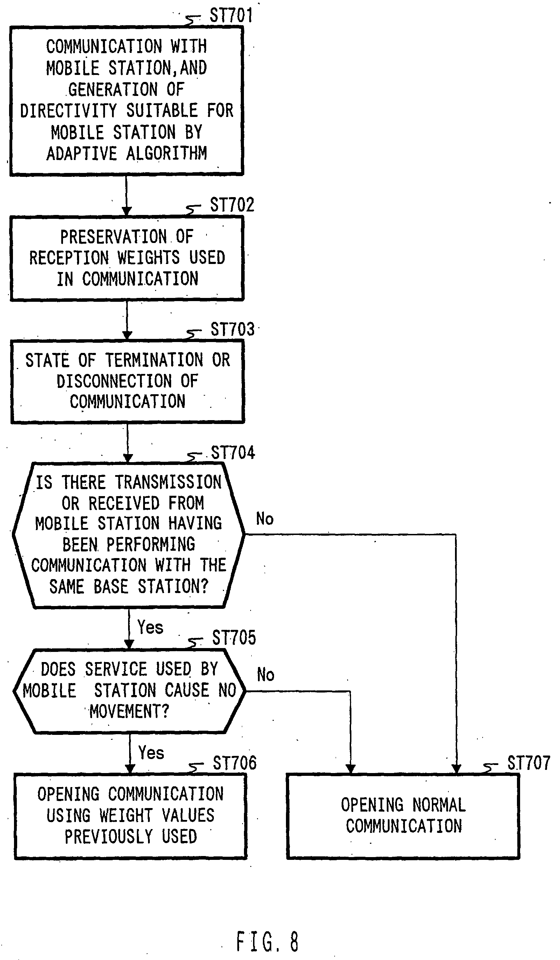

Then, operations of the base station apparatus 600 with the above configuration will be described, referring to FIG. 8 other than FIG. 7. FIG. 8 is a flow chart showing operations of the array antenna base station apparatus according to the third embodiment of the present invention.

In the first place, the base station apparatus 600 performs communication with the mobile station apparatus 200 at ST701. Operations in the base station apparatus 600 in such a time are similar to those described at ST201.

Then, the reception weights sent by the adaptive signal processing section 107 are stored in the storage section 601 at ST702 in the same manner as that at ST202. Moreover, communication information on the mobile station apparatus 200 from the announcement section 701 is stored in the storage section 601.

After termination of the operations at ST701 -and ST702, the processing moves, at ST703, to a state of disconnection or termination of communication between the base station apparatus 600 and the mobile station apparatus 200.

Thereafter, the processing moves to ST704, when the base station apparatus 600 opens communication with any one of mobile station apparatus. It is decided at ST704 whether the mobile station apparatus which opens communication with the base station apparatus 600 is the known mobile station apparatus (the mobile station apparatus 200 here) in the same manner as that at ST202. When it is- judged that the above mobile station apparatus is not the known mobile'station apparatus, the processing moves to ST707, and, the processing moves to ST705, when it is judged that the above mobile station apparatus is the known mobile station apparatus.

At ST707, the base station apparatus 600 opens normal communication with a new mobile station apparatus. Operations in the base station apparatus 600 in such a time are similar to those described at ST701 through ST703.

At ST705, the base station apparatus 600 reopens communication with the mobile station apparatus 200.

The operations of the base station apparatus 600 in such a case are as follows.

In the first place, the information on reopening of communication is sent from the notification section 108 to the storage section 601 in the same manner as that at ST205. In the storage section 601, the reception weights and the communication information, which have been previously stored, for the mobile station apparatus 200 are called, based on the information on the reopening of communication. The reception weights and the communication information are sent to the decision section 602.

In the decision section 602, it is decided, using the communication information from the storage section 601 (communication information on the mobile station apparatus 200 stored at the previous communication) and the communication information from the announcement section 701 (communication information on the mobile station apparatus 200 in the current communication), whether the reception weights for the mobile station apparatus 200 from the storage section 601 are applicable for array antenna processing. It may be decided by, for example, the kind of the contents of service which the mobile station apparatus 200 uses among the ones shown as follows whether the above reception weights are applicable for array antenna processing:
i) High-speed communication not meeting mobile units:
ii) Data communication for transmission of dynamic images and so on (packet communication and so on); and
iii) Communication from specific places.

That is, it may be supposed in the case of the communication like the above items i) through iii) that the mobile station apparatus 200 hardly moves from a position nearly at the previous communication. In such a case, it is decided that the reception weights from the storage section 601 are applicable for array antenna processing.

On the other hand, it may be supposed, when the communication does not meet the above items i) through iii), that the above apparatus 200 does not a little move from a position at the previous communication. In such a case, it is decided that the reception weights from the storage section 601 are not applicable for the array antenna processing.

When it is decided that the reception weights from the storage section 601 are applicable, the processing moves to ST706; and, in the case of decision that the above reception weights are not applicable, the processing moves to ST707.

At ST706, the reception weights from the storage section 601 are sent from the decision section 602 to the adaptive signal processing section 107. Thereby, it becomes possible without performing adaptive signal processing in the array antenna processing for the adaptive signal processing section 107 to have the reception directivity to the mobile station apparatus 200. In the above state, the demodulation signal obtained by multiplication processing in the adaptive signal processing section 107 become signals with a high SIR.

In such a state, the base station apparatus 600 opens communication with the mobile station apparatus 200. The subsequent operations are similar to those described at ST701 through ST703. The operations in the base station apparatus 100 have been described above.

Thus, in the array antenna base station apparatus according to the present embodiment, the reception weights for the mobile station apparatus obtained by adaptive signal processing at normal communication have been stored. Accordingly, it is possible, in the case of reopening communication after termination of normal communication, to form the reception directivity for the above mobile station apparatus by array antenna processing using the reception weights, when the previous communication and new communication have contents causing no movement of the mobile station apparatus. Thereby, high-quality communication with the above mobile station apparatus may be realized from a time point of reopening of communication, as the array antenna processing of the received signals of the above mobile station apparatus may be executed at reopening communication without waiting for calculation of the reception weights by the adaptive signal processing.

Here, in the above embodiments, a case has been described as one example where the array antenna base station apparatus performs radio communication with a mobile station apparatus. However, the present invention is not limited to the above embodiments, but also applicable for a case where the above array antenna base station apparatus performs radio communication with two or more mobile station apparatus. In such a case, the corresponding kinds, to the number of mobile station apparatus for radio communication, of base band signal processing sections are provided, and, at the same time, reception weights or mobile station information for each mobile station apparatus may be stored in the storage section.

And, in the above embodiments, a case has been described as one example where the array antenna base station apparatus performs array antenna reception using two antennas. However, the present invention is not limited to the above embodiments, but also applicable for a case where the above array antenna base station apparatus performs array antenna reception using three or more antenna. In such a case, the corresponding kinds, to the number of the above antennas, of reception radio circuits may be provided.

Moreover, the same base band signal processing section has been used both at the first communication, and at reopening communication, as a case, where only one kind of a base band signal processing section is provided, has been described in the above embodiments. However, even though the base band signal processing section used at the first communication and that at reopening communication are not the same, the same advantages as those of the above embodiments may be obviously realized, when plural kinds of base band signal processing sections are provided.

In addition, a case, where the base station apparatus has been used as a communication apparatus for array antenna processing, has been described in the above embodiments. However, the present invention is not limited to the above embodiments, but also applicable for a communication terminal apparatus and other kinds of communication apparatus for digital mobile communication.

As described above, it is configured according to the present invention that array antenna processing is performed at reopening of communication, using the reception weights calculated at the previous communication; in addition, new reception weights are generated at reopening of communication, using the reception weights calculated at the previous communication and the moving states measured by the above reception weights; and array antenna processing is performed, using the above generated reception weights. Thereby, it is possible to provide a array antenna base station apparatus for high-quality communication with communication terminal apparatus from a point of time when communication is reopened.

The present application is based upon claims from the prior Japanese Patent Application 2000 - 008974, filed on January 18, 2000. The entire contents are incorporated herein by reference.

### Industrial Applicability

The present invention is suitable for application to a communication apparatus used in a digital mobile communication system, and, especially, for use in a field of a base station apparatus provided with array antennas.

## Claims

1. A array antenna base station apparatus, comprising:
calculation means for calculation of reception weights by adaptive signal processing using demodulation signals of a communication terminal apparatus; and
multiplication means for multiplication processing using said calculated reception weights and said demodulation signals, wherein
said multiplication means may perform multiplication processing at a point of time when communication is opened, using said reception weights calculated at the previous communication with said communication terminal apparatus, and said demodulation signals.

2. A array antenna base station apparatus according to claim 1, wherein
said multiplication means comprises:
measuring means for measuring moving states of said communication terminal apparatus using said reception weights calculated by said calculation means; and
generation means by which reception weights at a point of time when communication is opened may be generated using said reception weights calculated at the previous communication with said communication terminal and said measured moving states, and
multiplication processing may be performed using said reception weights generated by said generation means and said demodulation signals.

3. A communication terminal apparatus for radio communication with a array antenna base station apparatus, wherein
said array antenna base station apparatus comprises;
calculation means for calculation of reception weights by adaptive signal processing using demodulation signals of said communication terminal apparatus; and
multiplication means for multiplication processing using said calculated reception weights and said demodulation signals, and
said multiplication means may perform multiplication processing using said reception weights calculated at the previous communication with said communication terminal, and said demodulation signals.

4. An array antenna reception method comprising:
a calculation step for calculation of reception weights by adaptive signal processing using demodulation signals of a communication terminal apparatus; and
a multiplication step for multiplication processing using said calculated reception weights and said demodulation signals, wherein
said multiplication step may perform multiplication processing at a point of time when communication is opened, using said reception weights calculated at the previous communication with said communication apparatus, and said demodulation signals.

5. An array antenna reception method according to claim 4, wherein
said multiplication step comprises:
a measuring state for measuring moving states of said communication terminal apparatus using said reception weights calculated at said calculation step; and
a generation step by which reception weights at a point of time when communication is opened may be generated using said reception weights calculated at the previous communication with said communication terminal and said measured moving states, and
multiplication processing may be performed using said reception weights generated at said generation step, and said demodulation signals.
